Europäisches Patentamt

European Patent Office

Office européen des brevets

(11) Numéro de publication: **0 297 402**
**A1**

## (12) DEMANDE DE BREVET EUROPEEN

(21) Numéro de dépôt: **88109864.4**

(22) Date de dépôt: **21.06.88**

(51) Int. Cl.⁴: **B23Q 1/18**

(30) Priorité: **26.06.87 CH 2416/87**

(43) Date de publication de la demande:
**04.01.89 Bulletin 89/01**

(84) Etats contractants désignés:
**DE FR GB IT SE**

(71) Demandeur: **EGIS S.A.**
**Rue Eugène de Coulon 5**
**CH-2022 Bevaix(CH)**

(72) Inventeur: **Geuggis, Michel**
**Chemin Beau-Site 3**
**CH-2016 Cortaillod(CH)**

(74) Mandataire: **Robert, Jean S.**
**51, route du Prieur**
**CH-1257 Landecy (Genève)(CH)**

(54) **Dispositif à coulisses croisées, notamment pour machine-outil.**

(57) Un chariot mobile de machine-outil est monté sur deux rails parallèles profilés (4) qui se déplacent sur quatre blocs à roulement (3), (à rouleaux ou à billes), eux-mêmes montés, à l'aide de roulements linéaires, sur deux rails parallèles profilés fixes (1), portés par un bâti (2), et qui sont perpendiculaires aux deux rails (4). Le chariot peut ainsi se déplacer le long de deux directions (12 et 13) perpendiculaires l'une à l'autre. Cette disposition élimine tout coulisseau intermédiaire, souvent compliqué, et permet de réduire au minimum la hauteur entre les éléments de guidage, ce qui accroît la précision géométrique de la machine.

FIG. 1

Xerox Copy Centre

EP 0 297 402 A1

## Dispositif à coulisses croisées, notamment pour machine-outil.

La présente invention a pour objet un dispositif à coulisses croisées, notamment pour machine-outil, comprenant au moins deux rails de guidage croisés.

Dans les dispositifs connus à coulisses croisées, pour machines-outils, la liaison entre les coulisseaux et le rails de guidage ou coulisses est assurée par des éléments rapportés dont la géométrie ainsi que les précontraintes sont à régler au montage même de la machine.

On connaît par ailleurs des dispositifs de guidage pout éléments mobiles de machines à déplacement linéaire qui sont à roulement. Ces dispositifs, appelés roulements linéaires ou glissières à roulement, occasionnent, lorsqu'ils sont appliqués à des coulisses croisées, en encombrement relativement important en hauteur, du fait qu'ils nécessitent la présence d'un coulisseau intermédiaire, ce qui nuit à la précision de la machine. De plus, le coulisseau intermédiaire est une pièce compliquée et généralement coûteuse.

Le but de la présente invention est de permettre de tirer profit des avantages des dispositifs de guidage linéaire à roulement dans le cas de coulisses croisées.

Ce but est atteint grâce aux moyens définis dans la revendication 1.

Le dessin représente, à titre d'exemple, une forme d'exécution de l'objet de l'invention.

La fig. 1 est une vue schématique, en perspective, d'un dispositif à coulisses croisées pour machine-outil, et

La fig. 2 est une vue en élévation, à plus grande échelle, d'un détail de ce dispositif.

Le dispositif représenté comprend deux rails profilés fixes 1 portés, par exemple, par un bâti tel le bâti 2, schématiquement représenté, sur lesquels sont montés quatre blocs formant coulisseaux, désignés d'une façon générale par 3. Ces blocs sont agencés de manière à recevoir, montés sur eux de façon coulissante, deux rails parallèles profilés 4 destinés à supporter un chariot mobile d'une machine-outil, non représenté.

Chaque bloc 3 est formé de deux organes identiques 5, en forme d'étriers, fixés l'un à l'autre par des vis 6 prenant dans une plaque intermédiaire 7, et qui sont "croisés", c'est-à-dire qui sont disposés l'un par rapport à l'autre de telle manière que leurs gorges, désignées par 8, ménagées entre leurs branches, désignées par 5a, soient perpendiculaires l'une à l'autre. Chaque étrier 5 porte quatre trains 9 de rouleaux cylindriques 10 agencés de manière à suivre chacun, sur l'étrier 5, un chemin annulaire fermé. Ces trains de rouleaux pourraient être au nombre de trois seulement. Ces rouleaux sont logés dans des gorges annulaires profilées ménagées dans les étriers 5, dans lesquelles ils sont maintenus par des entretoises en matière plastique présentant des tétons terminaux engagés dans des rainures que présentent les parois latérales desdites gorges annulaires. Les moyens de montage des rouleaux 10 ne seront pas décrits ici plus en détail, ne constituant pas, en soi, l'invention; de plus ils sont décrits et représentés dans le brevet No     issu de la demande No déposée par la titulaire du présent brevet le même jour que celui-ci.

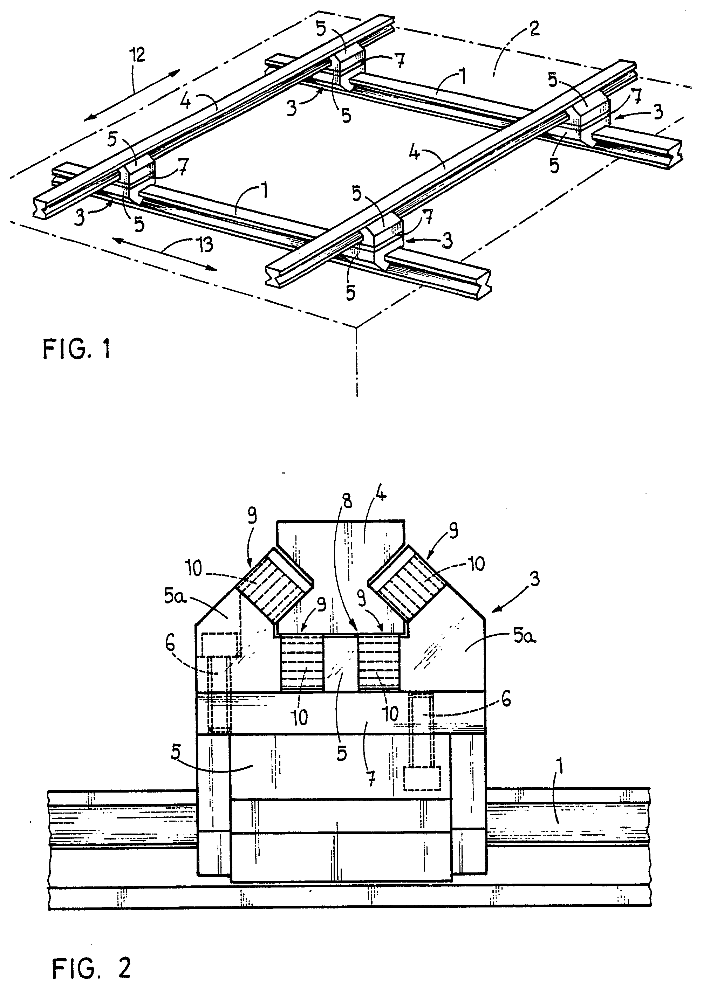

Grâce à la présente disposition, le chariot -- non représenté-- de la machine, porté par les rails 4, peut se déplacer dans deux directions perpendiculaires l'une à l'autre, à savoir la direction indiquée par la flèche 12 à la fig. 1, par déplacement des rails 4 dans les étriers supérieurs 5 des blocs 3, et dans la direction indiquée par la flèche 13, par déplacement des étriers inférieurs des blocs 3 le long des rails fixes de guidage 1, et ceci sans nécessiter de coulisseau intermédiaire. La hauteur du dispositif à coulisses croisées en est réduite d'autant, ce qui accroît la précision de la machine.

L'invention n'est pas limitée à la forme d'exécution décrite et représentée : c'est ainsi que les rouleaux 10 pourront être remplacés par tous organes de roulement cylindriques tels que des aiguilles ou des galets, par exemple, ou même par des billes.

De même, les blocs 3 formant coulisseaux pourront être en une seule pièce et non pas formés de deux étriers distincts rapportés l'un sur l'autre, comme dans l'exemple représenté.

## Revendications

1. Dispositif à coulisses croisées, notamment pour machine-outil, comprenant au moins deux rails de guidage croisés, caractérisé par le fait qu'au moins un double étrier est interposé entre lesdits rails, monté de façon qu'un mouvement relatif coulissant soit possible entre lui et les rails, la liaison entre ce double étrier et les rails étant assurée par des organes de roulement interposés entre lesdits éléments.

2. Dispositif suivant la revendication 1, caractérisé par le fait qu'il comprend deux paires de rails parallèles, croisées, la liaison entre les deux rails d'une paire et les deux rails de l'autre étant assurée par quatre double étriers engagés sur les deux rails d'une paire, avec interposition d'organes de roulement, sur lesquels sont engagés les rails de l'autre paire, également avec interposition d'organes de roulement.

3. Dispositif suivant la revendication 1, caractérisé par le fait que le double étrier a la forme d'un bloc parallélépipédique dans lequel sont ménagées deux gorges perpendiculaires l'une à l'autre, l'une pratiquée dans une des faces dudit bloc et l'autre dans sa face opposée, les rails s'engageant chacun dans une desdites gorges, ce bloc portant différents trains d'organes de roulement qui parcourent chacun un chemin annulaire et qui assurent la liaison entre ledit bloc et lesdits rails.

4. Dispositif suivant la revendication 3, caractérisé. par le fait que chaque bloc est muni d'au moins trois trains d'organes de roulement parallèles à l'une des gorges dudit bloc et qui coopèrent avec l'un desdits rails, et d'au moins trois trains de roulement parallèles à la seconde gorge du bloc et qui coopèrent avec le second rail.

5. Dispositif suivant la revendication 3, caractérisé par le fait que le double étrier est en deux pièces rapportées l'une sur l'autre, dans chacune desquelles est ménagée une gorge dans laquelle s'engage un desdits rails, ces deux pièces étant assemblées l'une à l'autre dans une position relative telle que lesdites gorges soient perpendiculaires l'une à l'autre et soient situées sur deux faces opposées du double étrier, chacune desdites pièces portant des trains d'organes de roulement parcourant chacun un chemin annulaire et assurant la liaison entre la pièce et le rail avec lequel elle coopère.

6. Dispositif suivant la revendication 5, caractérisé par le fait qu'une entretoise en forme de plaque est interposée entre les deux pièces du double étrier.

7. Dispositif suivant la revendication 5, caractérisé par le fait que chaque pièce du double étrier porte au moins trois trains d'organes de roulement disposés parallèlement à sa gorge.

8. Dispositif suivant la revendication 3, caractérisé par le fait que le double étrier est en une pièce.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 009 337  (TERAMACHI) <br> * Revendication 6 * | 1-4,8 | B 23 Q   1/18 |
| Y | | 5-7 | |
| Y | EP-A-0 139 781  (FÜRSTLICH) <br> * Revendication 1 * | 5-7 | |
| A | DE-A-3 435 561  (TERAMACHI) | 1,3,5 | |

### DOMAINES TECHNIQUES RECHERCHES (Int. Cl.4)

B 23 Q

Le présent rapport a été établi pour toutes les revendications

| Lieu de la recherche | Date d'achèvement de la recherche | Examinateur |
|---|---|---|
| LA HAYE | 29-09-1988 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)